# EUROPEAN PATENT APPLICATION

(11) **EP 1 184 654 A2**
(43) Date of publication of application: **06.03.2002**
(21) Application number: 01120284.3
(22) Date of filing: 23.08.2001
(51) Int. Cl.: G01M 11/00

(54) **Optical component measurement apparatus and method of testing optical component**

(30) Priority: 31.08.2000 JP 2000263750
(71) Applicant: Ando Electric Co., Ltd., Tokyo (JP)
(72) Inventor: Ema, Nobuaki, Tokyo (JP)
(74) Representative: Grünecker, Kinkeldey, Stockmair & Schwanhäusser Anwaltssozietät

(57) **Abstract**

An optical component measurement apparatus 1 is provided with an alignment controller 16 for adjusting alignment between a device 15 under test and measurement optical fibers. Further, each of a plurality of photodetectors 14 constituting an optical component tester 10 is provided with an analog signal output terminal. By means of switching action of a switch 18, an arbitrary output terminal can be connected to the voltmeter 17. The voltmeter 17 is equipped further with a wave form display device 19, thereby enabling monitoring of alignment without use of an external digital voltmeter or recorder.

## Description

### BACKGROUND OF THE INVENTION

### 1. Field of the Invention

The present invention relates to an optical component measurement apparatus for measuring a wavelength dependence characteristic of an optical component and to a method of testing an optical component.

### 2. Description of the Related Art

Optical devices to be used as principal components constituting an optical communications network have hitherto been mass-produced. Therefore, some degree of variation in characteristics arises between mass-produced products. Performing a test for determining whether or not the characteristics of such optical devices satisfy specifications requires measurement of a wavelength dependence characteristic of an optical device, thereby ensuring the reliability of the optical device.

Measurement of a wavelength dependence characteristic of an optical device is performed while the optical device remains unpackaged or bare. At the time of a measurement operation, minute positional adjustment must be performed such that a match arises between the bare device and an optical measurement fiber.

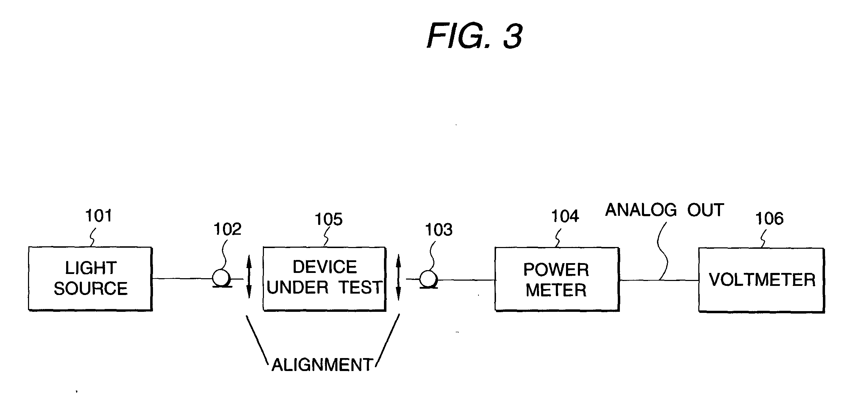

Before measurement is commenced, the position of a device under test is adjusted through use of an alignment controller 100 such as that shown in Fig. 3. The alignment controller 100 is constituted of a light source 101, an input optical fiber 102, an output optical fiber 103, an optical power meter 104, and a voltmeter 106. An unillustratedmovable pedestal on which a device 105 under test (hereinafter simply called a "device 105") is to be provided is disposed between the input optical fiber 102 and the output optical fiber 103. The device 105 is fixedly situated on the movable pedestal.

An optical signal originating from the light source 101 is input to the device 105 by way of the input optical fiber 102 and output by way of the output optical fiber 103. The thus-output signal light is observed by means of the optical power meter 104 and the voltmeter 106. The alignment controller 100 moves the movable pedestal to a position at which insertion loss arising in the optical signal is minimized, as determined on the basis of the result of observation, thereby adjusting positions at which the device 105 is connected to input and output measurement optical fibers.

However, in a related-art measurement operation, after the position of the device 105 and the positions of the measurement optical fibers have been adjusted, the measurement optical fibers are replaced with an optical component tester, and a wavelength dependence characteristic is measured. In a case where the device 105 is a multiple terminal device having a plurality of output terminals, an optical power meter must be prepared for each of the terminals, or the measurement optical fibers must be connected to one terminal after another. Thus, ameasurement preparation time is lengthened, thereby requiring expense in effort.

### SUMMARY OF THE INVENTION

The present invention is aimed at providing an optical component measurement apparatus which enables alignment of a device under test and measurement of an optical characteristic of the device, without modification of connections to the device.

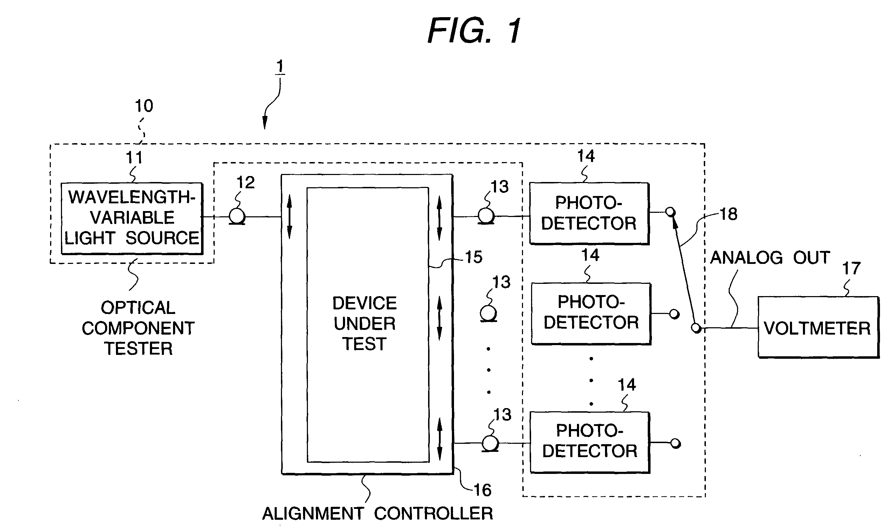

To achieve the above object, according to the present invention there is provided an optical component measurement apparatus which inputs a measurement optical signal originating from a measurement light source into an optical component under test and which measures an optical output signal output from the optical component, the apparatus comprising:
measurement means (e.g., photodetectors 14 and a voltmeter 17 shown in Fig. 1) for measuring an optical output signal output from the optical component;
a first optical fiber (e.g., an input optical fiber 12 shown in Fig. 1) which is connected to an input terminal of the optical component under test and inputs the measurement optical signal to the optical component;
a second optical fiber (e.g., an output optical fiber 13 shown in Fig. 1) which is connected to an output terminal of the optical component under test and transfers, to the measurement means, an optical output signal output from the optical component under test; and
position control means (e.g., an alignment controller 16 shown in Fig. 1) for adjusting relative positions between the first optical fiber, the second optical fiber, and connection sections of the optical component under test such that an optical signal level measured by the measurement means becomes maximum.

According to the present invention, an optical component measurement apparatus which inputs a measurement optical signal originating from a measurement light source into an optical component under test and which measures an optical output signal output from the optical component, the apparatus comprising:
measurement means for measuring an optical output signal output from the optical component;
a first optical fiber which is connected to an input terminal of the optical component under test and inputs the measurement optical signal to the optical component; and
a second optical fiber which is connected to an output terminal of the optical component under test and transfers, to the measurement means, an optical output signal output from the optical component under test. Position control means adjusts relative positions between the first optical fiber, the second optical fiber, and connection sections of the optical component under test such that an optical signal level measured by the measurement means becomes maximum. As a result, there is obviated a necessity of replacing the alignment controller with the optical component tester every time measurement is performed, thereby increasing a working efficiency and shortening working hours. Operations from alignment through actual measurement can be performed at a given position. There is obviated a necessity of moving the device under test, and hence the device becomes apt to come out of alignment during the course of operation. Hence, more accurate measurement of the device becomes possible, and reliability of the optical component tester can be improved.

Preferably, the optical component under test has a plurality of output terminals; the measurement means has a plurality of photodetectors (e.g., photodetectors 14 shown in Fig. 1) which detect optical output signals output from the plurality of output terminals of the optical component under test, and measurement equipment (e.g., a voltmeter 17 shown in Fig. 1) connected to the plurality of photodetectors; and the plurality of output terminals of the optical component under test are connected to corresponding photodetectors by way of corresponding second optical fibers.

Preferably, the optical component under test has a plurality of output terminals. The measurement means has a plurality of photodetectors which detect optical output signals output from the plurality of output terminals of the optical component under test, and measurement equipment connected to the plurality of photodetectors. The plurality of output terminals of the optical component under test are connected to corresponding photodetectors by way of corresponding second optical fibers. When a device under test has a plurality of output terminals, photodetectors can be connected to corresponding output terminals beforehand. Hence, there is obviated a necessity of changing connections to the output terminals every time measurement is performed, thus saving labor and shortening working hours.

Preferably, the measurement means is further provided with switch means for connects the plurality of photodetectors to the measurement equipment in a switchable manner.

The measurement means is further provided with switch means for connects the plurality of photodetectors to the measurement equipment in a switchable manner. A connection between an arbitrary photodetector and a voltmeter can be switched readily by means of a switch. Hence, there is obviated a necessity of using voltmeters equal in number to photodetectors or changing connections every time measurement is performed, thus saving costs and labor and shortening working hours.

Preferably, the measurement means further comprises a display device for displaying a result of measurement performed by the measurement equipment.

The measurement means further comprises a display device for displaying a result of measurement performed by the measurement equipment. An output level of an analog signal appearing on an arbitrary terminal can be displayed on the screen of the optical component tester. Hence, there is obviated switching or re-connection of a digital voltmeter or recorder to be used at the time of alignment operation, thus increasing a working efficiency. Further, even at the time of measurement of an optical characteristic, an output level of an analog signal appearing on an arbitrary output terminal can be displayed on the screen of the optical component tester. As a result, the state of alignment between a device under test and measurement optical fibers can be monitored without use of an external digital voltmeter or a recorder.

The present invention also provides a method of testing an optical component measurement apparatus which inputs a measurement optical signal originating from a measurement light source into an optical component under test and which measures an optical output signal output from the optical component, the method comprising the steps of:
inputting the measurement optical signal to the optical component under test by way of a first optical fiber connected to an input terminal of the optical component under test;
transmitting an optical signal output from the measurement optical component by way of a second optical fiber connected to an output terminal of the optical component under test; and
measuring an optical output signal output from the optical component under test on the basis of the optical output signal transmitted by way of the second optical fiber; and
adjusting relative positions between the first and second optical fibers and connections of the optical component under test such that the level of the measured optical output signal becomes maximum.

According to the present invention, there is provided a method of testing an optical component measurement apparatus which inputs a measurement optical signal originating from a measurement light source into an optical component under test and which measures an optical output signal output from the optical component, the method comprising the steps of:
inputting the measurement optical signal to the optical component under test by way of a first optical fiber connected to an input terminal of the optical component under test;
transmitting an optical signal output from the measurement optical component by way of a second optical fiber connected to an output terminal of the optical component under test; and
measuring an optical output signal output from the optical component under test on the basis of the optical output signal transmitted by way of the second optical fiber; and
adjusting relative positions between the first and second optical fibers and connections of the optical component under test such that the level of the measured optical output signal becomes maximum. As a result, there is obviated a necessity of replacing the alignment controller with the optical component tester every time measurement is performed, thereby increasing a working efficiency and shortening working hours. Operations from alignment through actual measurement can be performed at a given position. There is obviated a necessity of moving the device under test, and hence the device becomes apt to come out of alignment during the course of operation. Hence, more accurate measurement of the device becomes possible, and reliability of the optical component tester can be improved.

### BRIEF DESCRIPTION OF THE DRAWINGS

Fig. 1 is a block diagram showing the principal constitution of an optical component measurement apparatus 1 according to a first embodiment to which the present invention is applied;
Fig. 2 is a block diagram showing the principal constitution of an optical component measurement apparatus 2 according to a second embodiment to which the present invention is applied; and
Fig. 3 is a block diagram showing the principal constitution of a related-art alignment controller 1.

### DETAILED DESCRIPTION OF THE PREFERRED EMBODIMENTS

Embodiments of the present invention will be described in detail by reference to the accompanying drawings.

### (First Embodiment)

A first embodiment will be described with reference to Fig. 1.

Fig. 1 is a block diagram showing an embodiment of an optical component measurement apparatus to which the present invention is applied. First, the configuration of the optical component measurement apparatus will be described.

Fig. 1 is a block diagram showing the principal configuration of an optical component measurement apparatus 1 according to the first embodiment.

As shown in Fig. 1, the optical component measurement apparatus 1 comprises an optical component tester 10, an alignment controller 16, and a voltmeter 17. The optical component tester 10 comprises a wavelength-variable light source 11, a single input optical fiber 12, N output optical fibers 13, and N photodetectors 14. The alignment controller 16 is interposed between the input optical fiber 12 and the output optical fiber 13, and a device 15 under test (hereinafter simply called a "device 15") is provided on the alignment controller 16. Each of the photodetectors 14 has an analog signal output terminal, and the analog signal output terminals are switched by a switch 18 such that one of the analog signal output terminals is connected to a measurement terminal of the voltmeter 17.

The wavelength-variable light source 11 outputs an optical signal for imparting a test signal to the device 15. A semiconductor laser and a light-emitting diode are used for a light source. The wavelength and output intensity of a light signal to be output can be arbitrarily and variably set in accordance with the nature of a device under test and with measurement conditions. The input optical fiber 12 is connected to an output terminal of the variable-length light source 11, and the input optical fiber 12 is connected to the device 15.

Each of the photodetector 14 detects the intensity and spectral distribution of input light. In accordance with the nature of the device 15 and measurement conditions, conditions for detecting the intensity and spectral distribution of light can be set arbitrarily.

In the first embodiment, the optical component tester 10 has a plurality of photodetectors 14. When the device 15 has a plurality of output terminals, the respective output terminals can be connected to the photodetectors 14. By means of the switch 18, the photodetectors 14 connected to the output terminals are connected to the voltmeter 17 in accordance with measurement conditions. In other words, an output terminal of a desired photodetector 14 can be connected to the voltmeter 17 in accordance with connections between the output terminals of the device 15 and the photodetectors 14.

The photodetector 14 detects insertion loss arising in an output terminal of the device 15 connected to the photodetector 14. A result of detection is output as an analog voltage signal. By means of ascertaining the potential of the analog voltage signal through use of the voltmeter 17, the optical component tester 10 enables performance of an alignment operation for adjusting connections between the device 15, the input optical fiber 12, and the respective output optical fiber 13.

As illustrated, the device 15 is an optical component including optical elements, such as an optical module having one input terminal and a plurality of output terminals, an optical splitter, and an optical circulator. The device 15 is provided on the alignment controller 16, and the input optical fiber 12 is connected to an input terminal. The input optical fiber 12 is connected to the wavelength-variable light source 11. The output terminals of the device 15 are connected to the output optical fibers 13, and the output optical fibers 13 are further connected to the photodetectors 14.

An optical signal which has originated from the wavelength-variable light and is input to the device 15 by way of the input optical fiber 12 is susceptible to a change corresponding to the optical characteristic of the device 15. The optical signal is then output to the photodetectors 14 by way of the output optical fibers 13.

In a case where the device 15 has a plurality of output terminals, the output terminals of the device 15 are connected to a plurality of output optical fibers 13, whereby the output terminals are connected simultaneously to the plurality of photodetectors 14.

The alignment controller 16 has a movable pedestal on which the device 15 is to be mounted, and a controller for adjusting the position of the movable pedestal. The alignment controller 16 is interposed between the input optical fiber 12 and the output optical fibers 13.

The alignment controller 16 adjusts the position of the movable pedestal such that insertion loss in an output terminal of the device 15 as measured by the photodetector 14 and the voltmeter 17 is minimized. The alignment controller 16 performs alignment operation so that the input terminal and the corresponding one of the output terminals of the device 15, the input optical fiber 12, and the corresponding output optical fiber 13 are aligned with an optical axis.

The voltmeter 17 has an analog voltage signal input terminal, and an arbitrary photodetector 14 can be connected to the analog voltage signal input terminal by means of the switch 18. The voltmeter 17 displays the potential of an analog voltage signal output from the photodetector 13 as a numerical value, through use of a pointer or a digital display.

The switch 18 is interposed between the photodetector 14 of interest and the voltmeter 17. The switch 18 is fixedly connected to the voltmeter 17 and can be arbitrarily connected to any one of the photodetectors 14 in accordance with connections between the output terminals of the device 15 and the photodetectors 14. By means of switching action of the switch 18, a connection between one of the plurality of photodetectors 14 and the voltmeter 17 is switched. As a result, an output terminal of the device 15 to be measured can be readily changed.

Operations performed by the optical component measurement apparatus 1 according to the first embodiment will next be described.

First will be described operations required when there is performed an alignment adjustment operation for adjusting connections between the device 15, the input optical fiber 12, and the corresponding output optical fiber 13.

The optical signal output from the wavelength-variable light source 11 is input to the device 15 by way of the input optical fiber 12. The optical signal is output to the photodetector 14 by way of the output optical fiber 13. The photodetector 14 detects insertion loss in an output terminal of the device 15 connected to the photodetector 14, and a result of detection is output to the voltmeter 17 as an analog voltage signal. The alignment controller 16 activates the movable pedestal such that the insertion loss becomes smaller. As a result, connections between the input and output terminals of the device 15, the input optical fiber 12, and the corresponding output optical fiber 13 are aligned with the optical axis.

When the device 15 has a plurality of output terminals, one is selected from the plurality of photodetectors 14 assigned to the respective output terminals. The output optical fiber 13 connected to the thus-selected photodetector 14 is aligned with a corresponding output terminal.

Next will be described an operation for measuring the optical characteristic of the device 15. In the optical component measurement apparatus 1, the device 15 for which the input and output optical fibers 12 and 13 have been aligned with each other is subjected to measurement without modification to the connection between the input optical fiber 12 and the wavelength-variable light source 11 or to the connection between the output optical fiber 13 and the photodetector 14.

The output intensity and wavelength of the optical signal output from the wavelength-variable light source 11 have been set beforehand in accordance with the nature of the device 15 and measurement conditions. The optical signal is input to the device 15 by way of the input optical fiber 12. The optical signal that has been input to the device 15 is subjected to transmission, reflection, or scattering through various optical elements provided in the device 15.

The light that has transmitted through the optical elements provided in the device 15 and the light that has been scattered by the optical elements are output to the output optical fiber 13. The light is output further to the photodetector 14 by way of the output optical fiber 13. In accordance with the predetermined conditions under which the intensity and spectral distribution of light are to be detected, the photodetector 14 detects the intensity and spectral distribution of input light. A result of detection is output to the voltmeter 17 as an analog voltage signal. In connection with the analog voltage signal, the voltmeter 17 displays a corresponding voltage level as a potential, in the form of a numerical value and through use of a pointer or a digital display.

When the device 15 has a plurality of output terminals, photodetectors 14 are connected to corresponding output terminals beforehand. By means of switching action of the switch 18, the voltmeter 17 is sequentially switched to output terminals of the device 15 to be measured one after another.

As mentioned above, the optical component measurement apparatus 1 according to the first embodiment yields the following advantages.

The optical component tester is provided further with the function of adjusting alignment between a device under test and a measurement optical fiber. As a result, there is obviated a necessity of replacing the alignment controller with the optical component tester every time measurement is performed, thereby increasing a working efficiency and shortening working hours.

Operations from alignment through actual measurement can be performed at a given position. There is obviated a necessity of moving the device under test, and hence the device becomes apt to come out of alignment during the course of operation. Hence, more accurate measurement of the device becomes possible, and reliability of the optical component tester can be improved.

Since the optical component measurement apparatus 1 has a plurality of photodetectors constituting the optical component tester, photodetectors can be simultaneously connected to corresponding output terminals beforehand when a device having a plurality of output terminals is to be measured. Each of the photodetectors is provided with an analog signal output terminal, and a switch is interposed between the photodetectors and a voltmeter. Hence, an arbitrary photodetector can be readily connected to a voltmeter by means of switching action of the switch. As a result, a plurality of output terminals of the device can be readily measured without involvement of a change in connection every time measurement of an output terminal is finished.

The construction of the optical component measurement apparatus 1 described in connection with the previous embodiment is but one example; the number of optical component testers 10 and photodetectors 14 can be arbitrarily changed within the scope of the embodiment.

### (Second Embodiment)

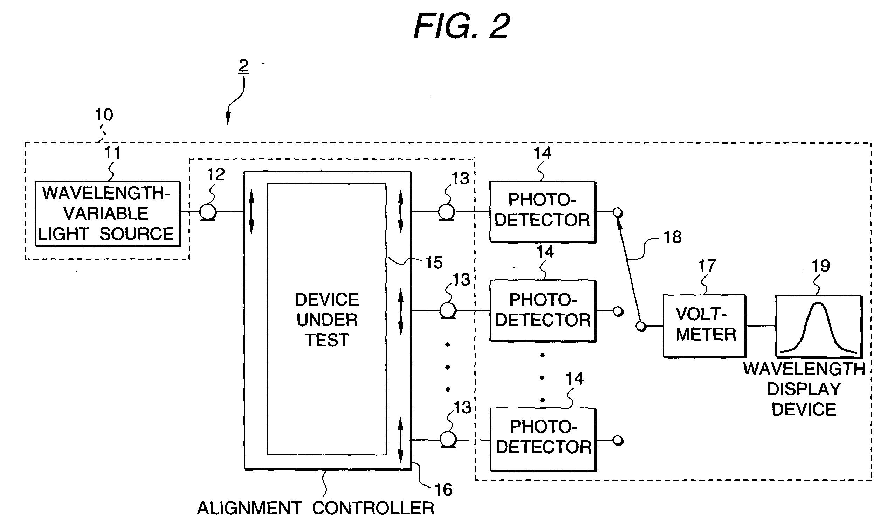

A second embodiment of the present invention will now be described by reference to Fig. 2.

Fig. 2 is a block diagram showing the principal construction of an optical component measurement apparatus 2 according to the second embodiment. Members which are the same as those shown in Fig. 1 are assigned the same reference numerals, and repeated explanations thereof are omitted.

The optical component measurement apparatus 2 according to the second embodiment shown in Fig. 2 differs from the optical component measurement apparatus 1 according to the first embodiment shown in Fig. 1 primarily in that the voltmeter 17 is further provided with a wave form display device 19 constituted of a liquid-crystal display for displaying the waveform of an optical output signal detected by the photodetector 14.

In the second embodiment, the voltmeter 17 displays the potential of an analog voltage signal output from the photodetector 13 as a numerical value, through use of a pointer or a digital display. Further, the voltmeter 17 outputs an analog voltage signal to the waveform display device 19.

The waveform display device 19 displays, on a screen and as a waveform, an output level of a voltage output from the voltmeter 17.

Operations to be performed by the optical component measurement apparatus 2 according to the second embodiment will now be described.

First, the operation of the optical component measurement apparatus 2 performed for adjusting connections between the device 15, the input optical fiber 12, and a corresponding output optical fiber 13 will be described.

An optical signal output from the wavelength-variable light source 11 is input to the device 15 by way of the input optical fiber 12. The device 15 outputs the optical signal to a corresponding photodetector 14 by way of the corresponding output optical fiber 13. The photodetector 14 detects insertion loss arising in an output terminal of the device 15 connected to the photodetector 14. When a result of detection of insertion loss is output to the voltmeter 17 as an analog voltage signal, the alignment controller 16 actuates the movable pedestal so as to make the insertion loss smaller. Accordingly, the input and output terminals of the device 15, the input optical fiber 12, and the corresponding optical fiber 13 are aligned with the optical axis.

The insertion loss measured by the photodetector 14 and the voltmeter 17 is output to the display device 19, where alignment between the input and output terminals of the device 15, the input optical fiber 12, and the corresponding optical fiber 13 can be monitored.

When the device 15 has a plurality of output terminals, photodetectors 14 are selected from among the plurality of photodetectors 14 so as to correspond to the output terminals. The output terminals are then aligned with the output optical fibers 13 connected to the thus-selected photodetectors 14.

Next will be described the operation of the optical component measurement apparatus 2 performed when the optical characteristic of the device 15 is measured. In the optical component measurement apparatus 2, the thus-aligned device 15 is measured without involvement of changes to connections between the input optical fiber 12, the wavelength-variable light source 11, the output optical fiber 13, and the photodetectors 14.

The output intensity and wavelength of the optical signal output from the wavelength-variable light source 11 have been set beforehand in accordance with the nature of the device 15 and measurement conditions. The optical signal is input to the device 15 by way of the input optical fiber 12. The optical signal that has been input to the device 15 is subjected to transmission, reflection, or scattering through various optical elements provided in the device 15.

The light that has transmitted through the optical elements provided in the device 15 and the light that has been scattered by the optical elements are output to the output optical fiber 13. The light is output further to the photodetector 14 by way of the output optical fiber 13. In accordance with the predetermined conditions under which the intensity and spectral distribution of light are to be detected, the photodetector 14 detects the intensity and spectral distribution of input light. A result of detection is output to the voltmeter 17 as an analog voltage signal. In connection with the analog voltage signal, the voltmeter 17 displays a corresponding voltage level as a potential, in the form of a numerical value and through use of a pointer or a digital display.

The voltmeter 17 displays an analog voltage signal corresponding to the intensity and spectral distribution of light as a corresponding potential. Next, the voltmeter 17 outputs the analog voltage signal to the waveform display device 19, and an output level of voltage appears on a screen of the waveform display device 19 as a waveform.

When the device 15 has a plurality of output terminals, photodetectors 14 are connected to corresponding output terminals beforehand. By means of switching action of the switch 18, the voltmeter 17 is sequentially switched to output terminals of the device 15 to be measured one after another.

According to the second embodiment, an output level of an analog voltage signal appearing on an arbitrary terminal is displayed in the form of a waveform on the screen of the optical component tester. In addition to the advantage yielded in the first embodiment, the second embodiment yields an advantage of ability to obviate a necessity of switching or re-connecting a digital voltmeter or a recorder to be used at the time of alignment operation, thus increasing a working efficiency. Even at the time of measurement of an optical characteristic, an output level of an analog voltage signal appearing on an arbitrary output terminal can be displayed in the form of a waveform on the screen of the optical component tester. Hence, the state of alignment between a device under test and measurement optical fibers can be monitored without use of an external digital voltmeter or a recorder.

The construction of the optical component measurement apparatus 2 described in connection with the previous embodiment is but one example; the number of optical component testers 20 and photodetectors 14 can be arbitrarily changed within the scope of the embodiment.

In the optical component measurement apparatus according to the present invention or under the method of testing an optical component according to the present invention, the optical component tester is further provided with a function of adjusting alignment between a device under test and measurement optical fibers. As a result, there is obviated a necessity of replacing the alignment controller with the optical component tester every time measurement is performed, thereby increasing a working efficiency and shortening working hours.

In the optical component measurement apparatus according to the present invention, when a device under test has a plurality of output terminals, photodetectors can be connected to corresponding output terminals beforehand. Hence, there is obviated a necessity of changing connections to the output terminals every time measurement is performed, thus saving labor and shortening working hours.

In the optical component measurement apparatus according to the present invention, a connection between an arbitrary photodetector and a voltmeter can be switched readily by means of a switch. Hence, there is obviated a necessity of using voltmeters equal in number to photodetectors or changing connections every time measurement is performed, thus saving costs and labor and shortening working hours.

In the optical component measurement apparatus according to the present invention, an output level of an analog signal appearing on an arbitrary terminal can be displayed on the screen of the optical component tester. Hence, there is obviated switching or re-connection of a digital voltmeter or recorder to be used at the time of alignment operation, thus increasing a working efficiency.

Even at the time of measurement of an optical characteristic, an output level of an analog signal appearing on an arbitrary output terminal can be displayed on the screen of the optical component tester. As a result, the state of alignment between a device under test and measurement optical fibers can be monitored without use of an external digital voltmeter or a recorder.

## Claims

1. An optical component measurement apparatus which inputs a measurement optical signal originating from a measurement light source into an optical component under test and which measures an optical output signal output from the optical component, the apparatus comprising:
a measurement unit for measuring an optical output signal output from the optical component;
a first optical fiber which is connected to an input terminal of the optical component under test and inputs the measurement optical signal to the optical component;
a second optical fiber which is connected to an output terminal of the optical component under test and transfers, to the measurement unit, an optical output signal output from the optical component under test; and
a position controller for adjusting relative positions between the first optical fiber, the second optical fiber, and connection sections of the optical component under test such that an optical signal level measured by the measurement unit becomes maximum.

2. The optical component measurement apparatus according to claim 1, wherein the optical component under test has a plurality of output terminals; the measurement unit has a plurality of photodetectors which detect optical output signals output from the plurality of output terminals of the optical component under test, and measurement equipment connected to the plurality of photodetectors; and the plurality of output terminals of the optical component under test are connected to corresponding photodetectors by way of corresponding second optical fibers.

3. The optical component measurement apparatus according to claim 2, wherein the measurement unit is further provided with a switch for connects the plurality of photodetectors to the measurement equipment in a switchable manner.

4. The optical component measurement apparatus according to claim 3, wherein the measurement unit further comprises a display device for displaying a result of measurement performed by the measurement equipment.

5. A method of testing an optical component measurement apparatus which inputs a measurement optical signal originating from a measurement light source into an optical component under test and which measures an optical output signal output from the optical component, the method comprising the steps of:
inputting the measurement optical signal to the optical component under test by way of a first optical fiber connected to an input terminal of the optical component under test;
transmitting an optical signal output from the measurement optical component by way of a second optical fiber connected to an output terminal of the optical component under test;
measuring an optical output signal output from the optical component under test on the basis of the optical output signal transmitted by way of the second optical fiber; and
adjusting relative positions between the first and second optical fibers and connections of the optical component under test such that the level of the measured optical output signal becomes maximum.
